# FASCICULE DE BREVET EUROPEEN

(11) **EP 3 765 720 B1**
(45) Date de publication et mention de la délivrance du brevet: **02.03.2022**
(21) Numéro de dépôt: 19709503.7
(22) Date de dépôt: 12.03.2019
(51) Int. Cl.: F01N 11/00

(54) **PROCÉDÉ ET DISPOSITIF DE DÉTERMINATION DE LA PRÉSENCE ET DU FONCTIONNEMENT D'UN FILTRE À PARTICULES**
VERFAHREN UND VORRICHTUNG ZUR BESTIMMUNG DES VORHANDENSEINS UND DES BETRIEBS EINES PARTIKELFILTERS
METHOD AND DEVICE FOR DETERMINING THE PRESENCE AND THE OPERATION OF A PARTICLE FILTER

(30) Priorité: 13.03.2018 FR 1852164
(43) Date de publication de la demande: 20.01.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: OTTONELLI, Claudio, 75011 PARIS (FR); CARCEL-CUBAS, Juan Antonio, 47270 Cigales (ES)
(74) Mandataire: Renault Group
(86) Numéro de dépôt international: PCT/EP2019/056180
(87) Numéro de publication internationale: WO 2019/175188

(56) Documents cités:
- GB-A- 2 508 667
- US-A1- 2008 110 238
- US-A1- 2011 100 094
- US-A1- 2014 033 680

## Description

La présente invention se rapporte à un procédé et à un dispositif de détermination de la présence et du fonctionnement d'un filtre à particules d'un moteur à combustion interne à allumage commandé.

Il est connu de vouloir procéder à un diagnostic du filtre à particules d'un moteur à combustion interne. Ce diagnostic consiste à déterminer si le filtre à particules est en état de fonctionnement ou s'il est dans un état de dysfonctionnement. Quand le moteur associé au filtre à particules est monté sur un véhicule automobile, la réglementation dite OBD (de l'acronyme en langue anglaise pour : On-Board Diagnostics) impose de pouvoir réaliser ce diagnostic à tout moment, et notamment, en situation de conduite du véhicule.

Usuellement, l'architecture du traitement des gaz d'échappement du moteur comprend, en aval du moteur, deux monolithes qui réalisent un post-traitement catalytique des gaz, un monolithe amont et un monolithe aval, lequel inclut une fonction de filtre à particules. Le monolithe aval présente une zone amont d'entrée des gaz d'échappement, et une zone aval de sortie des gaz d'échappement. Il est équipé de capteurs, et notamment, d'un capteur de pression permettant de fournir une valeur de la pression différentielle entre la zone amont et la zone aval. Ce capteur de pression permet de détecter la surcharge du filtre à particules et de prévenir ainsi les risques d'incendie. Les monolithes comportent également en amont, des moyens de mesure de débit, par exemple un débitmètre, permettant de mesurer le débit massique des gaz traversant le filtre à particules. Dans un autre cas de figure, le débit peut être déduit de la section d'une vanne de réglage de débit des gaz entrant dans le moteur, et de la pression ainsi que de la température régnant dans un répartiteur d'admission du moteur.

Grâce à ces mesures ou à ces estimations, il est connu de pouvoir évaluer le fonctionnement du filtre à particules. Pour ce faire, au moyen d'un organe de mémorisation et d'un calculateur, on enregistre la différence entre la pression de la zone amont et la pression de la zone aval ; on enregistre le débit massique des gaz, et on calcule de la sorte la quantité instantanée (débit massique) de particules entrant dans le filtre à particules, dont on déduit par intégration temporelle le chargement en suies du filtre à particules, c'est-à-dire la masse de suies qui y est stockée ; on détermine ensuite, en fonction du débit et du chargement, une valeur théorique de dépression aux bornes du filtre à partir d'une table préétablie par des essais ; puis on calcule le critère de diagnostic comme étant égal à la différence entre la dépression théorique et la dépression réelle ; et enfin, on déclare le filtre défaillant, lorsque le critère est supérieur à un seuil, ce dernier étant une fonction de la quantité de particules, ou suies, stockée dans le filtre. En effet, si le filtre est défaillant, c'est-à-dire si il est endommagé ou que le monolithe aval est totalement absent, alors le filtre retient mal, voire ne retient pas du tout, les particules de suies contenues dans les gaz d'échappement du moteur, contrairement à un filtre en bon état de fonctionnement qui a tendance à se boucher sous l'effet de l'accumulation progressive des suies. Un filtre défaillant ne présente donc qu'une faible dépression à ses bornes en comparaison avec un filtre en bon état, pour un débit identique, si bien que ladite dépression réelle s'écarte de la dépression théorique.

On pourra se référer au document FR-A1-2 939 474, lequel décrit un tel procédé de détermination de la présence et du fonctionnement du filtre à particules du monolithe aval, relativement complexe et nécessitant des temps de calcul élevés.

US-A1-2011/100094 divulgue un autre procédé de détermination de la présence et du fonctionnement d'un filtre à particules.

Aussi, un problème qui se pose et que vise à résoudre la présente invention est de fournir un procédé et un dispositif de détermination du fonctionnement et/ou de présence d'un filtre à particules, qui soit plus simple et qui permette de fournir des résultats fiables et rapides.

On propose un procédé de détermination de la présence et du fonctionnement d'un filtre à particules d'un moteur à combustion interne et à allumage commandé, ledit moteur à combustion interne produisant des gaz d'échappement selon un débit variable, lesdits gaz d'échappement étant guidés à travers ledit filtre à particules entre une zone amont et une zone aval dudit filtre à particules, le procédé étant du type comprenant les étapes suivantes :
- a) on échantillonne, pour une succession d'instants, des valeurs de débit massique de gaz traversant ledit filtre à particules et simultanément, des valeurs de pression différentielle des gaz entre ladite zone amont et ladite zone aval dudit filtre à particules correspondant aux valeurs de débit massique ; et,
- b) on détermine, en fonction desdites valeurs de débit et de pression différentielle des gaz enregistrées, si ledit filtre à particules est présent et fonctionne.

A l'étape b) on calcule, pour chaque instant d'échantillonnage, à partir des valeurs échantillonnées de débit et de pression différentielle des gaz, une valeur d'intégrale temporelle du débit massique et une valeur de critère de présence correspondant à la somme des valeurs de pressions différentielles échantillonnées ; et
lorsque ladite valeur d'intégrale temporelle du débit massique atteint ou dépasse une valeur de seuil haut, on compare la valeur de critère de présence à une valeur de seuil de présence de sorte à déterminer la présence et le fonctionnement du filtre à particules.

Ainsi, on peut obtenir une détection fiable et rapide de la présence du filtre à particules dans le monolithe aval, indépendamment de la connaissance de la mesure du taux de charge en suie du filtre à particules.

Avantageusement et de manière non limitative, ladite valeur d'intégrale temporelle du débit massique calculée à l'étape b) pour un instant donné, correspond à la somme de la valeur d'intégrale temporelle du débit massique calculée pour l'instant précédent avec la valeur de débit massique de gaz échantillonnée à l'instant donné. Ainsi, le calcul de la valeur d'intégrale temporelle est rapide et nécessite de faibles ressources logiques.

Avantageusement et de manière non limitative, la valeur de seuil de présence est inférieure à 50mbar, et préférentiellement inférieure à 25mbar. Ainsi, on peut détecter de manière relativement fiable la présence ou non du filtre à particules.

Avantageusement et de manière non limitative, on filtre les échantillons obtenus à l'étape a) avec un filtre de premier ordre. Ainsi, on améliore encore la détection du filtre à particules, en particulier pour les débits massiques de gaz de faible valeur.

Avantageusement et de manière non limitative, on décale les valeurs de pression différentielle échantillonnées par une valeur de biais (ou d' « offset ») prédéterminée. Ainsi, on améliore le procédé de détection en recalant, par ajout d'un offset, les valeurs échantillonnées de sorte à compenser un éventuel manque de précision des capteurs de pression permettant d'obtenir la pression différentielle.

Avantageusement et de manière non limitative, on procède à l'échantillonnage de l'étape a) seulement si la valeur de débit massique de gaz est supérieure à une valeur de seuil bas de débit. Ainsi, on interdit au procédé de réaliser une détection lorsque la valeur de débit massique de gaz n'est pas suffisamment élevée, de sorte à interdire une détection erronée, du type faux-positif.

L'invention concerne aussi un dispositif, par exemple un microprocesseur, de détermination de la présence et du fonctionnement d'un filtre à particules d'un moteur à combustion interne et à allumage commandé, ledit moteur à combustion interne produisant des gaz d'échappement selon un débit variable, lesdits gaz d'échappement étant guidés à travers ledit filtre à particules entre une zone amont et une zone aval dudit filtre à particules, ledit dispositif comprenant des moyens pour :
- des moyens d'échantillonnage, pour une succession d'instants, de valeurs de débit massique de gaz traversant ledit filtre à particules et simultanément, de valeurs de pression différentielle des gaz entre ladite zone amont et ladite zone aval dudit filtre à particules correspondant aux valeurs de débit massique ; et,
- des moyens de détermination, en fonction desdites valeurs de débit et de pression différentielle des gaz enregistrées, de la présence et du fonctionnement dudit filtre à particules.

lesdits moyens de détermination étant adaptés pour calculer, à chaque instant d'échantillonnage, à partir des valeurs échantillonnées de débit et de pression différentielle des gaz, une valeur d'intégrale temporelle du débit massique et une valeur de critère de présence correspondant à la somme des valeurs de pressions différentielles échantillonnées; et
lorsque ladite valeur d'intégrale temporelle du débit massique atteint ou dépasse une valeur de seuil haut, pour comparer la valeur de critère de présence à une valeur de seuil de présence de sorte à déterminer la présence et le fonctionnement du filtre à particules.

L'invention concerne aussi un ensemble moteur comprenant un moteur à combustion interne et à allumage commandé, ledit moteur à combustion interne produisant des gaz d'échappement selon un débit variable, lesdits gaz d'échappement étant guidés à travers ledit filtre à particules (18) entre une zone amont (20) et une zone aval (22) dudit filtre à particules (18), ledit ensemble comprenant en outre un dispositif de détermination de la présence et du fonctionnement d'un filtre à particules (18) tel que décrit précédemment.

L'invention concerne aussi véhicule automobile comprenant un ensemble moteur tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue schématique partielle d'un organe de traitement des gaz d'échappement d'un moteur à combustion interne ;
- la figure 2 est un synoptique d'un dispositif conforme à l'invention équipant l'organe de traitement représenté sur la figure 1 ;
- la figure 3 est une vue schématique d'un logigramme des étapes de la méthode selon un premier mode de réalisation de l'invention ;
- la figure 4 est un graphe montrant l'évolution de paramètres échantillonnés sur l'organe de traitement des gaz d'échappement représenté sur la figure 1, selon le premier mode de réalisation de l'invention ; et
- la figure 5 est un graphe montrant l'évolution de paramètres échantillonnés sur l'organe de traitement des gaz d'échappement représenté sur la figure 1, selon un deuxième mode de réalisation de l'invention.

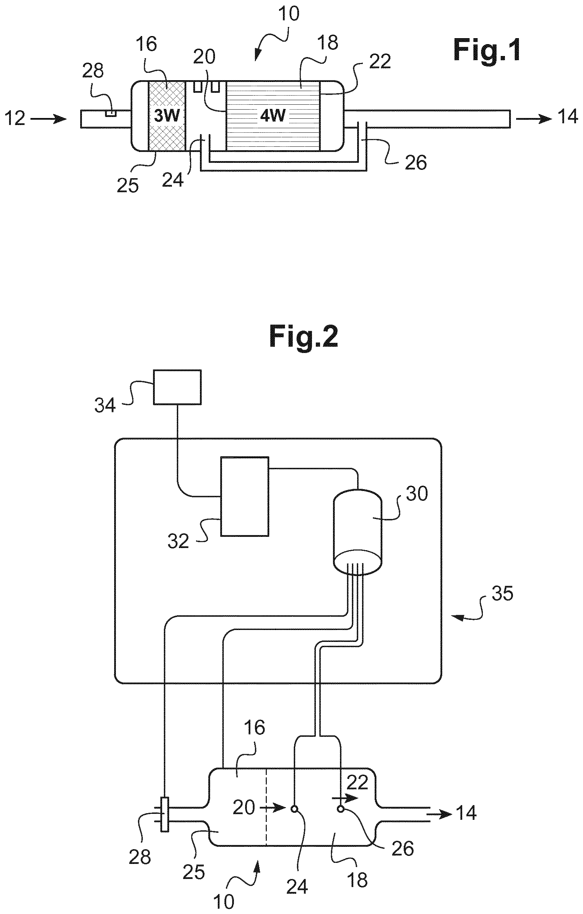

La Figure 1 illustre un organe de traitement 10 des gaz d'échappement d'un moteur à combustion interne non représenté. Ce moteur à combustion interne est de préférence réservé aux véhicules automobiles. L'organe de traitement 10 présente une entrée 12 reliée à l'échappement du moteur à combustion interne, par exemple à un collecteur d'échappement ou à la turbine d'un turbocompresseur du moteur, et une sortie 14 opposée, reliée par exemple au silencieux de l'installation d'échappement. L'organe de traitement 10 comporte deux monolithes de traitement catalytique des polluants contenus dans les gaz émis par le moteur, un monolithe amont 16 et un monolithe aval 18 qui inclut également une fonction de filtre à particules. Le monolithe aval 18 présente une zone d'entrée 20, ou amont, des gaz d'échappement, et à l'opposé, une zone de sortie 22, ou aval, des gaz échappement.

De surcroît, il comporte une sonde de pression d'entrée 24 et une sonde de pression de sortie 26 permettant de donner une valeur de la différence de pression des gaz d'échappement entre la zone d'entrée et la zone de sortie 22.

Aussi, l'organe de traitement 10 comporte, par exemple en amont du monolithe amont 16, un débitmètre 25 permettant de mesurer le débit des gaz d'échappement qui le traversent, et par conséquent, qui traversent le monolithe aval 18. De surcroît, l'organe de traitement 10 comporte également une sonde de mesure de richesse 28.

En variante connue en soi, le débit des gaz peut être déterminé par d'autres moyens non représentés ici, par exemple à partir d'un modèle qui est une fonction de la position d'ouverture d'un boîtier-papillon du moteur et de valeurs de pression et de température dans un répartiteur d'admission du moteur.

Selon une autre variante, le débitmètre peut être monté à l'admission du moteur, le débit des gaz d'échappement étant obtenu comme la somme du débit des gaz d'admission et du débit de carburant, par un principe de conservation de masse.

Les gaz d'échappement produits par le moteur à combustion interne, contiennent essentiellement, outre de la vapeur d'eau et du dioxyde de carbone CO₂, des oxydes d'azote NOₓ, du monoxyde de carbone CO, et des hydrocarbures imbrûlés. Ils entrent dans le monolithe amont 16 de manière à pouvoir à être transformés en molécules inoffensives.

Le monolithe aval 18, intègre, outre les fonctions d'oxydation et de réduction des molécules précitées, une fonction de filtration des particules, lesquelles se présentent sous la forme de suies.

Aussi, il est nécessaire que cette fonction de filtration des particules soit opérationnelle en toutes circonstances. C'est pourquoi, le contrôle de cette fonction doit être effectué régulièrement de façon automatique lorsque le véhicule automobile est en fonctionnement. Les causes de dysfonctionnement incluent la possibilité que le monolithe aval 18 ait été détérioré ; ou bien encore qu'il soit absent de l'organe de traitement 10.

Par simplification, on assimilera par la suite le filtre à particules avec le monolithe aval 18, dans la mesure où l'invention vise uniquement à estimer la présence et le fonctionnement du filtre à particules du monolithe aval 18. Autrement dit on se référera de manière indistincte au monolithe aval 18 ou au filtre à particules 18.

La figure 2 illustre schématiquement l'organe de traitement 10 incluant le monolithe aval 18 et le filtre à particules. On retrouve également, d'une part la sonde de pression d'entrée 24 et la sonde de pression de sortie 26 et d'autre part le débitmètre 25 ou d'autres moyens de détermination du débit. Les sondes sont reliées à une 30 mémoire, laquelle est reliée à un processeur 32. Ce dernier commande l'affichage d'informations sur un organe d'affichage 34. Les sondes, 24, 26, le débitmètre 25, la mémoire 30, le processeur 32 et l'organe d'affichage 34 constituent ensemble un dispositif de détermination 35 permettant de déterminer si la fonction de filtration des particules du monolithe aval 18 est opérante ou non.

Ainsi, l'organe de traitement 10 permet de mettre en œuvre le procédé de détermination de la présence et du fonctionnement du filtre à particules du monolithe aval 18 conformément à l'invention.

Le procédé selon l'invention pour déterminer la présence et le fonctionnement du filtre à particules du monolithe aval 18 repose sur la corrélation entre le débit d'air massique entrant dans le monolithe aval 18 et la pression différentielle mesurée entre la zone d'entrée 20 et la zone de sortie 22 du filtre à particules du monolithe aval 18.

On parle dans la description de manière synonyme de débit d'air massique ou de débit massique de gaz.

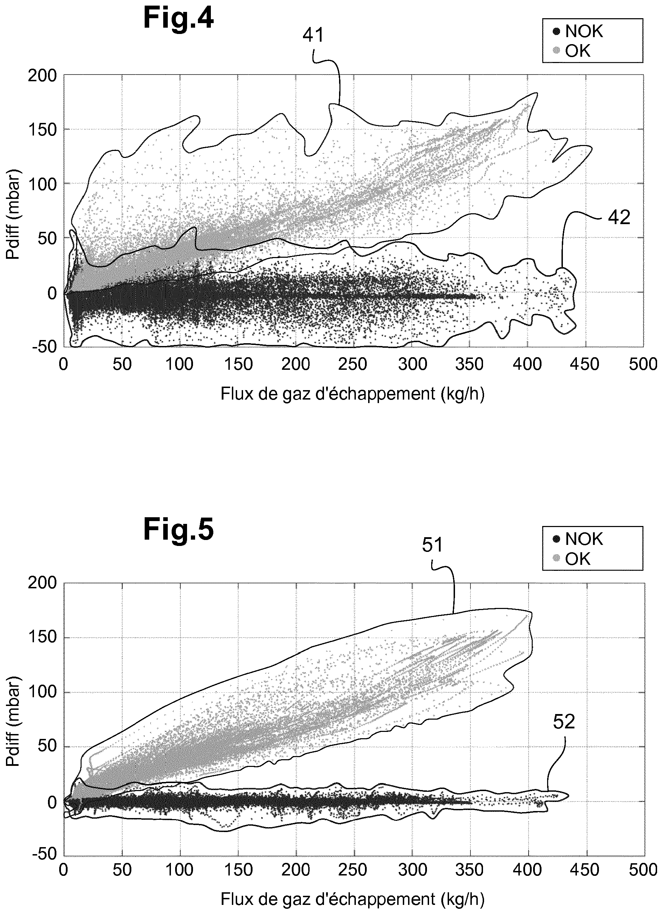

On remarque, en référence à la figure 4, que le premier nuage de points 41 échantillonnés dans le cas d'un filtre à particule présent et fonctionnel présente une pression différentielle augmentant à mesure que le débit d'air massique augmente.

Cette augmentation des valeurs échantillonnées est, de manière surprenante, indépendante de l'encombrement en suies du filtre à particules.

En effet, la présence de suies engendre une augmentation de la pression différentielle par rapport à un filtre à particules vide et donc une augmentation de la pente du nuage de points correspondant au cas du filtre à particules en fonctionnement, tel que représenté dans la figure 4. Toutefois la pente du nuage de points n'est pas un paramètre pris en compte pour déterminer la présence du filtre à particule ; seule la variation de la différence de pression, indépendamment de sa vitesse d'évolution, permet de détecter la présence et le fonctionnement de ce filtre à particules.

A contrario, le deuxième nuage de points 42, relatif au cas d'un filtre à particule absent ou défectueux, au sens qu'il ne filtre plus les particules, présente des valeurs de pression différentielles réparties autour de zéro quelle que soit l'évolution du débit d'air massique.

Aussi le procédé de détermination selon l'invention comprend une étape répétitive où, pour chaque instant d'échantillonnage, on calcule l'intégrale temporelle du débit d'air massique depuis un instant d'initialisation, et en parallèle on calcule une valeur dite de critère de présence, correspondant à la somme de pressions différentielles mesurées depuis cet instant d'initialisation.

Lorsque la valeur d'intégrale temporelle atteint ou dépasse une valeur d'arrêt, l'étape répétitive d'échantillonnage est arrêtée.

Cette valeur d'arrêt correspondant à une valeur de volume d'air ayant traversé le monolithe aval 18 depuis l'instant d'initialisation, cette valeur de volume d'air étant considérée comme suffisante pour mettre en évidence l'évolution de la pression différentielle.

Une fois l'étape répétitive arrêtée, on compare la valeur du critère de présence à une valeur de seuil de présence.

Si le critère de présence à une valeur inférieure à ce seuil de présence, alors le filtre à particule est considéré comme absent ou défectueux.

A contrario si le critère de présence est supérieur à ce seuil de présence, alors le filtre à particules est considéré comme présent.

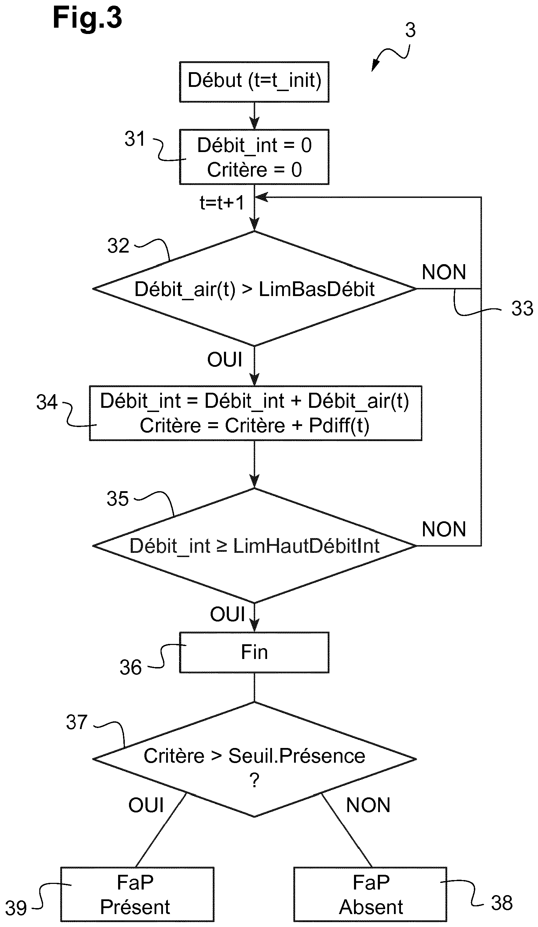

Ainsi, en référence à la figure 3, pour déterminer la présence ou le fonctionnement du filtre à particules, dans une première étape d'initialisation 31 on initialise une valeur d'intégrale temporelle calculée debit_int à 0 et on initialise une variable dite de critère de présence à 0.

A chaque instant d'échantillonnage t, on compare 32 le débit d'air massique entrant dans le monolithe aval 18 à une valeur de seuil bas de débit *LimBasDebit.*

Si le débit d'air massique est inférieur à la valeur de seuil bas de débit *LimBasDebit*, alors on attend 33 l'instant suivant d'échantillonnage afin que les valeurs prises en compte permettent une détection fiable. En effet, pour distinguer clairement l'évolution des nuages de points, et par conséquent pour obtenir un critère de présence fiable il est nécessaire d'avoir un débit d'air massique suffisant, par exemple supérieur à 100kg/h. A des valeurs inférieures, les valeurs échantillonnées peuvent prêter à confusion sur la présence ou non du filtre à particules.

Lorsque le débit d'air massique est supérieur à cette valeur de seuil bas de débit *LimBasDebit*, on calcule 34 une nouvelle valeur d'intégrale temporelle du débit massique depuis l'instant d'initialisation ainsi que la valeur de critère de présence. Cette étape de calcul 34 est aussi appelée étape de mise à jour 34 des valeurs d'intégrale temporelle du débit massique de critère de présence depuis l'instant d'initialisation.

La mise à jour 34 de la valeur d'intégrale du débit massique comprend la sommation de l'intégrale temporelle du débit massique à l'instant précédent auquel avec le débit d'air massique échantillonné à l'instant présent.

La mise à jour 34 de la valeur de critère de présence correspond à la sommation de la valeur de critère de présence à l'instant précédent avec la pression différentielle échantillonnée à l'instant présent.

Après l'étape de mise à jour 34, on compare 35 la valeur d'intégrale temporelle du débit massique mise à jour avec une valeur de seuil haut LimHautDebitlnt.

Si la valeur d'intégrale temporelle du débit massique mise à jour est inférieure à la valeur de seuil haut LimHautDebitlnt, le procédé reprend à l'étape de comparaison 32 du débit d'air massique entrant dans le monolithe aval 18 avec la valeur de seuil bas de débit *LimBasDebit.*

Si la valeur d'intégrale temporelle du débit massique mise à jour est supérieure à la valeur de seuil haut LimHautDebitlnt, les étapes répétitives d'échantillonnage et de mise à jour 34 du procédé sont interrompues 36.

On compare 37 alors la valeur de critère de présence obtenue avec une valeur de seuil de présence.

Si la valeur du critère de présence est inférieure 38 à la valeur de seuil de présence alors le filtre à particules est considéré comme absent ou défectueux.

A contrario, si la valeur du critère de présence est supérieure 39 à la valeur de seuil de présence, alors le filtre à particule est considéré comme présent et fonctionnel.

La valeur de seuil de présence est déterminée en fonction de la sensibilité et de la fiabilité des capteurs de pression employés pour calculer la pression différentielle. En effet, on remarque, notamment en référence aux figures 4 et 5, que les valeurs mesurées 42, 52 pour des pressions différentielles sensiblement nulles, varient en pratique de manière centrée autour de 0, dans une bande de valeurs comprises entre deux seuils ; le seuil positif étant considéré comme la valeur de seuil de présence. Ces seuils permettent de tenir compte du manque de précision et du bruit pouvant être observé sur les capteurs permettant de calculer la pression différentielle.

La valeur de seuil de présence est par exemple de 50mbar, et préférentiellement de 25mbar, en particulier pour le deuxième mode de réalisation décrit ci-après.

Le procédé dans son intégralité, partant de l'étape d'initialisation 31 peut ensuite être recommencé, et réinitialisé, soit immédiatement ou dans un délai plus ou moins long selon les besoins de contrôle et de détection du filtre à particules du monolithe aval 18.

En particulier le procédé peut être mis en œuvre une fois à chaque démarrage du véhicule automobile.

Un tel procédé de diagnostic est particulièrement rapide car il ne subit aucune inertie des capteurs, et il est fiable car il ne dépend pas de l'état de saturation du filtre à particules, et aucune fausse détection liée à un départ « à chaud » ne peut être déclenchée.

Toutefois, l'invention selon ce premier mode de réalisation de l'invention peut être améliorée, en particulier quant à sa fiabilité. En effet, de par la dispersion des valeurs échantillonnées et par un effet de décalage des valeurs mesurées par rapport à une pression nulle, lié notamment au manque de précision des capteurs employés, de fausses détections peuvent être déclenchées alors que le filtre est soit absent soit défectueux, on parle de « faux positif ».

A cet effet, dans un deuxième mode de réalisation, on applique un filtre de premier ordre avec une constante de temps τ=1s sur les données échantillonnées afin de filtrer les données.

En outre, on applique un biais, dit aussi « offset », sur la mesure de pression différentielle, dès le début des échantillonnages, en se basant notamment sur un apprentissage de la pression de référence, effectué en particulier lors de l'arrêt du moteur. Ceci permet ainsi de recaler les valeurs mesurées par les sondes et de les rendre cohérentes les unes par rapport aux autres.

De cette manière, on obtient des valeurs acquises telles que représentées par les nuages de points du graphique de la figure 4, avec un premier nuage de point 41 correspondant aux valeurs représentatives d'un filtre à particule présent et fonctionnel, et un deuxième nuage de point 42 correspondant aux valeurs représentatives d'un filtre à particule absent ou défectueux.

Les étapes 32, 33, 34, 35 mises en œuvre de manière répétitive par le procédé 3 sont alors effectuées sur la base de ces valeurs échantillonnées, filtrées et recalées.

Le calcul du critère de présence du filtre à particules se base alors sur l'intégrale temporelle du signal de pression différentielle lorsque le débit est supérieur à une valeur de seuil, afin de séparer de manière plus évidente les valeurs acquises.

Le procédé selon l'un quelconque des modes de réalisation de l'invention décrit précédemment peut aussi être mis en œuvre par l'enregistrement préalable des échantillons de valeurs, par exemple durant une durée de temps prédéterminée, puis par l'exécution des étapes de détection se basant sur les valeurs échantillonnées après l'enregistrement de ces échantillons. Ainsi, on peut découpler l'acquisition des données et le traitement de ces données.

## Revendications

1. Procédé de détermination de la présence et du fonctionnement d'un filtre à particules (18) d'un moteur à combustion interne et à allumage commandé, ledit moteur à combustion interne produisant des gaz d'échappement selon un débit variable, lesdits gaz d'échappement étant guidés à travers ledit filtre à particules (18) entre une zone amont (20) et une zone aval (22) dudit filtre à particules (18), le procédé étant du type comprenant les étapes suivantes :
- a) on échantillonne, pour une succession d'instants, des valeurs de débit massique de gaz traversant ledit filtre à particules et simultanément, des valeurs de pression différentielle des gaz entre ladite zone amont (20) et ladite zone aval (22) dudit filtre à particules (18) correspondant aux valeurs de débit massique ; et,
- b) on détermine (32-39), en fonction desdites valeurs de débit et de pression différentielle des gaz enregistrées, si ledit filtre à particules (18) est présent et fonctionne ;
**caractérisé en ce qu'**à l'étape b) on calcule (34), pour chaque instant d'échantillonnage, à partir des valeurs échantillonnées de débit et de pression différentielle des gaz, une valeur d'intégrale temporelle du débit massique et une valeur de critère de présence correspondant à la somme des valeurs de pressions différentielles échantillonnées; et
lorsque ladite valeur d'intégrale temporelle du débit massique atteint ou dépasse (35) une valeur de seuil haut, on compare (37) la valeur de critère de présence à une valeur de seuil de présence de sorte à déterminer (38, 39) la présence et le fonctionnement du filtre à particules (18).

2. Procédé selon la revendication 1, **caractérisé en ce que** ladite valeur d'intégrale temporelle du débit massique calculée à l'étape b) pour un instant donné, correspond à la somme de la valeur d'intégrale temporelle du débit massique calculée pour l'instant précédent avec la valeur de débit massique de gaz échantillonnée à l'instant donné.

3. Procédé selon la revendication 1 ou 2, **caractérisé en ce que** la valeur de seuil de présence est inférieure à 50mbar, et préférentiellement inférieure à 25mbar.

4. Procédé selon l'une quelconque des revendications 1 à 3, **caractérisé en ce qu'**on filtre les échantillons obtenus à l'étape a) avec un filtre de premier ordre.

5. Procédé selon l'une quelconque des revendications 1 à 4, **caractérisé en ce qu'**on décale les valeurs de pression différentielle échantillonnées par une valeur de biais prédéterminée.

6. Procédé selon l'une quelconque des revendications 1 à 5, **caractérisé en ce qu'**on procède à l'échantillonnage de l'étape a) seulement si la valeur de débit massique de gaz est supérieure à une valeur de seuil bas de débit.

7. Dispositif de détermination de la présence et du fonctionnement d'un filtre à particules (18) d'un moteur à combustion interne et à allumage commandé, ledit moteur à combustion interne produisant des gaz d'échappement selon un débit variable, lesdits gaz d'échappement étant guidés à travers ledit filtre à particules (18) entre une zone amont (20) et une zone aval (22) dudit filtre à particules (18), ledit dispositif comprenant des moyens pour :
- des moyens d'échantillonnage, pour une succession d'instants, de valeurs de débit massique de gaz traversant ledit filtre à particules et simultanément, de valeurs de pression différentielle des gaz entre ladite zone amont et ladite zone aval dudit filtre à particules correspondant aux valeurs de débit massique ; et,
- des moyens de détermination, en fonction desdites valeurs de débit et de pression différentielle des gaz enregistrées, de la présence et du fonctionnement dudit filtre à particules (18);
**caractérisé en ce que** les moyens de détermination sont adaptés pour calculer, à chaque instant d'échantillonnage, à partir des valeurs échantillonnées de débit et de pression différentielle des gaz, une valeur d'intégrale temporelle du débit massique et une valeur de critère de présence correspondant à la somme des valeurs de pressions différentielles échantillonnées; et
lorsque ladite valeur d'intégrale temporelle du débit massique atteint ou dépasse une valeur de seuil haut, pour comparer la valeur de critère de présence à une valeur de seuil de présence de sorte à déterminer la présence et le fonctionnement du filtre à particules (18).

8. Ensemble moteur comprenant un moteur à combustion interne et à allumage commandé, ledit moteur à combustion interne produisant des gaz d'échappement selon un débit variable, lesdits gaz d'échappement étant guidés à travers ledit filtre à particules (18) entre une zone amont (20) et une zone aval (22) dudit filtre à particules (18), ledit ensemble comprenant en outre un dispositif de détermination de la présence et du fonctionnement d'un filtre à particules (18) selon la revendication 7.

9. Z Véhicule automobile comprenant un ensemble moteur selon la revendication 8.

## Patentansprüche

1. Verfahren zur Bestimmung des Vorhandenseins und des Betriebs eines Partikelfilters (18) eines Verbrennungsmotors mit Fremdzündung, wobei der Verbrennungsmotor Abgase gemäß einem variablen Durchfluss erzeugt, wobei die Abgase zwischen einer stromaufwärtigen Zone (20) und einer stromabwärtigen Zone (22) des Partikelfilters (18) durch den Partikelfilter (18) geleitet werden, wobei das Verfahren von der Art ist, die die folgenden Schritte enthält:
a) für eine Folge von Zeitpunkten werden Massendurchflusswerte von den Partikelfilter durchquerenden Gasen und gleichzeitig Differenzdruckwerte der Gase zwischen der stromaufwärtigen Zone (20) und der stromabwärtigen Zone (22) des Partikelfilters (18) entsprechend den Massendurchflusswerten abgetastet; und
b) abhängig von den registrierten Durchfluss- und Differenzdruckwerten der Gase wird bestimmt (32-39), ob der Partikelfilter (18) vorhanden ist und arbeitet;
**dadurch gekennzeichnet, dass** im Schritt b) für jeden Abtastzeitpunkt ausgehend von den abgetasteten Durchfluss- und Differenzdruckwerten der Gase ein Zeitintegralwert des Massendurchflusses und ein Vorhandenseinskriteriumswert entsprechend der Summe der abgetasteten Differenzdruckwerte berechnet werden (34); und
wenn der Zeitintegralwert des Massendurchflusses einen hohen Schwellenwert erreicht oder überschreitet (35), der Vorhandenseinskriteriumswert mit einem Vorhandenseinsschwellenwert verglichen wird (37), um das Vorhandensein und den Betrieb des Partikelfilters (18) zu bestimmen (38, 39).

2. Verfahren nach Anspruch 1, **dadurch gekennzeichnet, dass** der im Schritt b) für einen gegebenen Zeitpunkt berechnete Zeitintegralwert des Massendurchflusses der Summe des für den vorhergehenden Zeitpunkt berechneten Zeitintegralwerts des Massendurchflusses und des zum gegebenen Zeitpunkt abgetasteten Massendurchflusswerts von Gas entspricht.

3. Verfahren nach Anspruch 1 oder 2, **dadurch gekennzeichnet, dass** der Vorhandenseinsschwellenwert niedriger als 50 mbar, und vorzugsweise niedriger als 25 mbar ist.

4. Verfahren nach einem der Ansprüche 1 bis 3, **dadurch gekennzeichnet, dass** die im Schritt a) erhaltenen Tastproben mit einem Filter erster Ordnung gefiltert werden.

5. Verfahren nach einem der Ansprüche 1 bis 4, **dadurch gekennzeichnet, dass** die abgetasteten Differenzdruckwerte um einen vorbestimmten systematischen Fehlerwert versetzt werden.

6. Verfahren nach einem der Ansprüche 1 bis 5, **dadurch gekennzeichnet, dass** die Abtastung des Schritts a) nur durchgeführt wird, wenn der Massendurchflusswert von Gas höher als ein niedriger Durchflussschwellenwert ist.

7. Vorrichtung zur Bestimmung des Vorhandenseins und des Betriebs eines Partikelfilters (18) eines Verbrennungsmotors mit Fremdzündung, wobei der Verbrennungsmotor Abgase gemäß einem variablen Durchfluss erzeugt, wobei die Abgase zwischen einer stromaufwärtigen Zone (20) und einer stromabwärtigen Zone (22) des Partikelfilters (18) durch den Partikelfilter (18) geleitet werden, wobei die Vorrichtung Einrichtungen enthält für:
- Abtasteinrichtungen, für eine Folge von Zeitpunkten, von Massendurchflusswerten von Gasen, die den Partikelfilter durchqueren, und gleichzeitig von Differenzdruckwerten der Gase zwischen der stromaufwärtigen Zone und der stromabwärtigen Zone des Partikelfilters entsprechend den Massendurchflusswerten; und
- Bestimmungseinrichtungen, abhängig von den gespeicherten Durchfluss- und Differenzdruckwerten der Gase, des Vorhandenseins und des Betriebs des Partikelfilters (18);
**dadurch gekennzeichnet, dass** die Bestimmungseinrichtungen geeignet sind, zu jedem Abtastzeitpunkt ausgehend von den abgetasteten Durchfluss- und Differenzdruckwerten der Gase einen Zeitintegralwert des Massendurchflusses und einen Vorhandenseinskriteriumswert entsprechend der Summe der abgetasteten Differenzdruckwerte zu berechnen; und
wenn der Zeitintegralwert des Massendurchflusses einen hohen Schwellenwert erreicht oder überschreitet, den Vorhandenseinskriteriumswert mit einem Vorhandenseinsschwellenwert zu vergleichen, um das Vorhandensein und den Betrieb des Partikelfilters (18) zu bestimmen.

8. Motoranordnung, die einen Verbrennungsmotor mit Fremdzündung enthält, wobei der Verbrennungsmotor Abgase gemäß einem variablen Durchfluss erzeugt, wobei die Abgase zwischen einer stromaufwärtigen Zone (20) und einer stromabwärtigen Zone (22) des Partikelfilters (18) durch den Partikelfilter (18) geleitet werden, wobei die Anordnung außerdem eine Vorrichtung zur Bestimmung des Vorhandenseins und des Betriebs eines Partikelfilters (18) nach Anspruch 7 enthält.

9. Kraftfahrzeug, das eine Motoranordnung nach Anspruch 8 enthält.

## Claims

1. Method for determining the presence and operation of a particulate filter (18) of a controlled ignition internal combustion engine, said internal combustion engine producing exhaust gases at a variable flowrate, said exhaust gases being guided through said particulate filter (18) between an upstream zone (20) and a downstream zone (22) of said particulate filter (18), the method being of the type comprising the following steps:
- a) sampling, for a succession of instants, values of the mass flowrate of gas passing through said particulate filter and, at the same time, values of the differential pressure of the gases between said upstream zone (20) and said downstream zone (22) of said particulate filter (18) corresponding to the mass flowrate values; and
- b) determining (32-39), as a function of said recorded values of gas flowrate and gas differential pressure, whether said particulate filter (18) is present and working;
**characterized in that**, in step b), a value for the integral, with respect to time, of the mass flowrate and a value of a presence criterion corresponding to the sum of the sampled values of differential pressures are calculated (34), for each sampling instant, from the sampled values of the flowrate and differential pressure of the gases, and
when said value of the integral, with respect to time, of the mass flowrate reaches or exceeds (35) an upper threshold value, the value of the presence criterion is compared (37) against a presence threshold value so as to determine (38, 39) the presence and working of the particulate filter (18).

2. Method according to Claim 1, **characterized in that** said value of the integral, with respect to time, of the mass flowrate, as calculated in step b) for a given instant, corresponds to the sum of the value of the integral, with respect to time, of the mass flowrate calculated for the preceding instant with the value, sampled at the given instant, of the mass flowrate of the gas.

3. Method according to Claim 1 or 2, **characterized in that** the presence threshold value is lower than 50 mbar, and preferably lower than 25 mbar.

4. Method according to any one of Claims 1 to 3, **characterized in that** the samples obtained in step a) are filtered using a first order filter.

5. Method according to any one of Claims 1 to 4, **characterized in that** the sampled differential-pressure values are offset by an offset of predetermined value.

6. Method according to any one of Claims 1 to 5, **characterized in that** the sampling of step a) is carried out only if the value of the gas mass flowrate is above a flowrate of lower threshold value.

7. Device for determining the presence and operation of a particulate filter (18) of a controlled ignition internal combustion engine, said internal combustion engine producing exhaust gases at a variable flowrate, said exhaust gases being guided through said particulate filter (18) between an upstream zone (20) and a downstream zone (22) of said particulate filter (18), said device comprising means for:
- sampling means sampling, for a succession of instants, values of the mass flowrate of gas passing through said particulate filter and, at the same time, values of the differential pressure of the gases between said upstream zone and said downstream zone of said particulate filter corresponding to the mass flowrate values; and
- determining means determining, as a function of said recorded gas flowrate and differential pressure values, the presence and working of said particulate filter (18); **characterized in that** the determining means are designed to calculate, at each sampling instant, from the sampled values of gas flowrate and differential pressure, a value of the integral, with respect to time, of the mass flowrate and a value for a presence criterion corresponding to the sum of the sampled differential-pressure values; and
when said value of the integral, with respect to time, of the mass flowrate reaches or exceeds an upper threshold value, to compare the presence criterion value against a presence threshold value so as to determine the presence and working of the particulate filter (18).

8. Engine assembly comprising a controlled ignition internal combustion engine, said internal combustion engine producing exhaust gases at a variable flowrate, said exhaust gases being guided through said particulate filter (18) between an upstream zone (20) and a downstream zone (22) of said particulate filter (18), said assembly further comprising a device for determining the presence and working of a particulate filter (18) according to Claim 7.

9. Motor vehicle comprising an engine assembly according to Claim 8.
